# EUROPEAN PATENT SPECIFICATION

(11) **EP 3 346 588 B1**
(45) Date of publication and mention of the grant of the patent: **05.05.2021**
(21) Application number: 15902945.3
(22) Date of filing: 31.08.2015
(51) Int. Cl.: H02K 9/10, H02K 5/20

(54) **ROTARY ELECTRIC MACHINE**
ROTIERENDE ELEKTRISCHE MASCHINE
MACHINE ÉLECTRIQUE ROTATIVE

(43) Date of publication of application: 11.07.2018
(73) Proprietor: Mitsubishi Electric Corporation, Chiyoda-ku Tokyo 100-8310 (JP)
(72) Inventor: KAWASHIMA Koji, Tokyo 100-8310 (JP); MATSUMOTO Fumio, Tokyo 100-8310 (JP)
(74) Representative: Sajda, Wolf E.
(86) International application number: PCT/JP2015/074592
(87) International publication number: WO 2017/037822

(56) References cited:
- GB-A- 195 764
- JP-A- S6 173 542
- JP-A- H09 205 758
- JP-A- S60 102 836
- JP-A- S60 102 836
- JP-B2- 3 289 721
- JP-U- S5 742 560
- US-A1- 2003 020 339

## Description

### Technical Field

The present invention is defined in independent claim 1 and relates to a rotary electric machine and, more particularly, to a rotary electric machine having a cooling structure for cooling a stator and a rotor by circulating a cooling gas.

### Background Art

In a rotary electric machine having a cooling structure for cooling a stator and a rotor by circulating a cooling gas such as air or a hydrogen gas, the stator and the rotor are accommodated in a casing, a cooling gas is supplied to cooling gas flow paths provided in the rotor and the stator from the cooling gas inflow ports provided at both ends of a rotary shaft to cool the rotor and the stator, the cooling gas is cooled by a gas cooling unit, and the cooling gas is circulated to cool the rotor and the stator again.

In such a rotary electric machine using the cooling gas, the cooling gas circulated by a fan is evenly blown to get the most of the cooling performance of the gas cooling unit (PTL 1).

Particularly in the rotary electric machine disclosed in PTL 1, gas cooling units are distributed in four positions on both side surfaces at both ends of the rotary shaft of the rotor to balance the state of cooling by a cooling gas.

### List of Citations

### Patent Literature

Patent Literature 1: Japanese Patent JP 5 388 961 B2
Patent literature 2: JPS60102836
Patent literature 3: GB 195764
Patent literature 4: JP3289721B

### SUMMARY OF INVENTION

### Technical Problem

When a plurality of gas cooling units is distributed to get the most of the cooling performance of the gas cooling units, connection between the gas cooling units and gas circulation paths becomes complicated. In addition, since the size of the entire rotary electric machine is increased by the outer dimensions of the gas cooling units, the flexibility of installation is reduced.

In particular, when the gas cooling units are disposed on both side surfaces of the rotary electric machine, since the gas cooling units disposed on the side surfaces of the rotary electric machine project, a wide installation area is necessary.

That is, although a large gas cooling unit having additional cooling performance can be provided when the installation area is sufficient, an object of the invention is to improve the flexibility of installation of the rotary electric machine by obtaining sufficient cooling performance using the minimum volume.

### Solution to the Problem

A rotary electric machine according to the invention includes
a casing in which a stator and a rotor are accommodated,
a gas cooling unit including
intake ports for a cooling gas provided on both ends and communicating with the casing,
a high temperature cooling gas flow path through which the cooling gas at high temperature sucked from the intake ports passes,
a ventilation surface exchanging heat with the cooling gas at high temperature and cooling the cooling gas,
a low temperature cooling gas flow path through which the cooling gas having passed through the ventilation surface passes, and
exhaust ports for the cooling gas which are provided at both ends and through which the cooling gas at low temperature in the low temperature cooling gas flow path flows to the casing, in which the ventilation surface is disposed above, below, or beside a side surface of the casing so as to be parallel to a rotary shaft of the rotor,
the gas cooling unit disposed so that the high temperature cooling gas flow path is away from the casing and the low temperature cooling gas flow path is close to the casing, and
a heat insulating unit provided between the low temperature cooling gas flow path of the gas cooling unit and the casing, the heat insulating unit preventing transfer of heat between the low temperature cooling gas flow path and the casing.

### Advantageous Effects of the Invention

According to the invention, since the cooling efficiency of gas cooling units can be improved, the number of gas cooling units to be installed can be minimized, the rotary electric machine having a minimum installation area can be achieved, and the flexibility of installation can be increased.

### BRIEF DESCRIPTION OF DRAWINGS

- FIG. 1: is a schematic cross sectional view illustrating Embodiment 1 of the invention.
- FIG. 2: is a schematic cross sectional view taken along line A-A in FIG. 1.
- FIG. 3: is a schematic cross sectional view illustrating Embodiment 2 of the invention.
- FIG. 4: is a schematic cross sectional view taken along line B-B in FIG. 3.
- FIG. 5: is a schematic cross sectional view illustrating Embodiment 3 of the invention.
- FIG. 6: is a schematic cross sectional view taken along line B-B in FIG. 5.
- FIG. 7: is a schematic cross sectional view illustrating an example of Embodiment 4 of the invention.
- FIG. 8: is a schematic cross sectional view seen from line B-B in FIG. 7.
- FIG. 9: is a schematic cross sectional view illustrating an example of Embodiment 4 of the invention.
- FIG. 10: is a schematic cross sectional view illustrating an example of Embodiment 4 of the invention.

### Description of Embodiments

### Embodiment 1

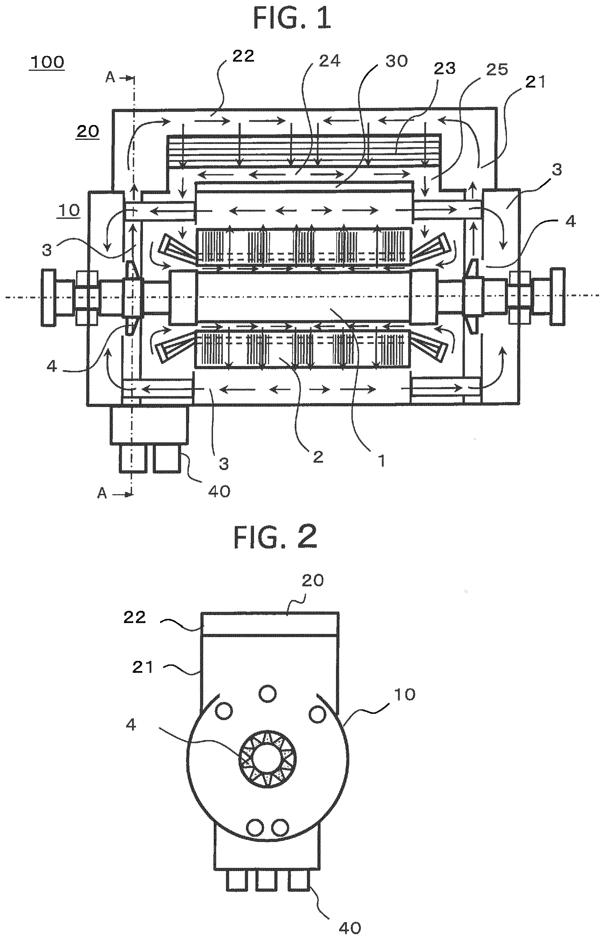

An embodiment of the invention will be described below with reference to the drawings. As illustrated in FIG. 1, a rotary electric machine 100 is configured as an integrated structure including a casing 10 in which a rotor 1 and a stator 2 are accommodated and a gas cooling unit 20 for cooling the cooling gas in the casing 10.

A pipe for supplying the cooling gas is not present between the casing 10 and the gas cooling unit 20 and the gas cooling unit 20 is integrally attached to the casing 10. The rotor 1 and the stator 2 are cooled by directly receiving the cooling gas cooled by the gas cooling unit 20 into the casing 10. In the casing 10, there is a cooling gas flow path 3 having a complicated structure through which the cooling gas circulates.

As the cooling gas flow path 3, the duct between the rotor 1 and the stator 2 and the duct (not illustrated) of the stator 2 are used to cool the rotor 1 and the stator 2. The cooling gas circulates as a fan 4 provided in the rotor 1 rotates, flows through the cooling gas flow path 3 as illustrated arrows in the drawing to cool the rotor 1 and the stator 2, returns to the gas cooling unit 20, is cooled again by the gas cooling unit 20, and returns to the casing 10.

As illustrated in FIG. 1, the gas cooling unit 20 includes cooling gas intake ports 21 communicating with the casing 10 at both ends, a high temperature cooling gas flow path 22 through which the cooling gas at high temperature sucked from the intake ports 21 flows, a ventilation surface 23 exchanging heat with the cooling gas at high temperature and cooling the cooling gas, a low temperature cooling gas flow path 24 through which the cooling gas having passed through the ventilation surface 23 passes, exhaust ports 25, provided at both ends, through which the cooling gas at low temperature in the low temperature cooling gas flow path 24 flows to the casing.

In Embodiment 1, the gas cooling unit 20 is mounted above the side surface of the casing 10. In particular, the ventilation surface 23 of the gas cooling unit 20 is disposed in parallel to the rotary shaft of the rotor 1 so that the high temperature cooling gas flow path 22 is away from the casing 10 and the low temperature cooling gas flow path 24 is close to the casing 10.

In such a structure, since the temperature of the wall surface of the casing 10 is increased by the cooling gas having cooled the stator 2, it is necessary to prevent the temperature of the low temperature cooling gas flow path 24 from being increased by heat of the outer wall of the casing 10.

Accordingly, a heat insulating unit 30 is provided between the casing 10 and the gas cooling unit 20 to prevent heat from being transferred from the casing 10 to the gas cooling unit 20. In Embodiment 1, the heat insulating unit 30 is a space.

The heat insulating unit 30 is an encapsulated space communicating with no other spaces and the gas hermetically sealed in this space prevents heat from being transferred. In addition, the effect can be further improved by filling the heat insulating unit 30 with a heat insulating material or a liquid such as heat insulating oil and sealing the heat insulating unit 30 so that the heat transfer is further prevented.

FIG. 2 schematically illustrates a cross section taken along line A-A in FIG. 1. This cross sectional view indicates the part from the fan 4 to the intake ports 21 of the gas cooling unit 20 and the entry of the high temperature cooling gas flow path 22 among flow paths for the cooling gas circulated by the fan 4. In addition, the gas cooling unit 20 is provided above the casing 10 and a main lead 40 is provided below the casing 10. That is, the main lead 40 for transmitting and receiving electric power and the gas cooling unit 20 are provided axially symmetrically with respect to the rotary shaft of the rotor 1 and, when the main lead 40 is drawn downward from the casing 10, the gas cooling unit 20 is provided above the casing 10.

If the gas cooling unit 20 is disposed above the casing 10 and the main lead 40 is disposed below the casing 10 as described above, the installation area of the rotary electric machine 100 can be reduced and the flexibility of disposition of the rotary electric machine 100 can be increased.

### Embodiment 2

In Embodiment 1, the main lead 40 of the rotary electric machine 100 is drawn downward from the casing 10. However, the direction in which the main lead 40 is drawn is not limited to the downward direction of the casing 10 and, depending on the disposition of the rotary electric machine 100, the main lead 40 may be drawn upward from the casing 10.

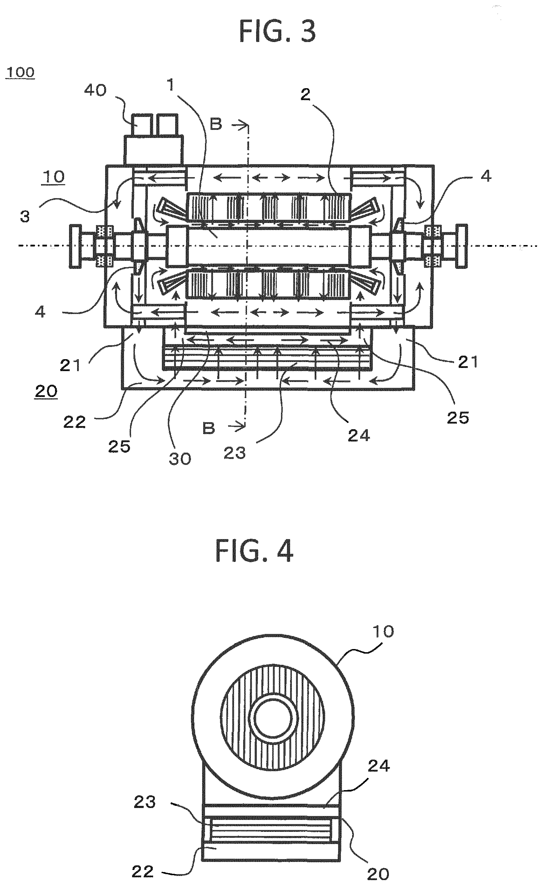

In this case, the gas cooling unit 20 is disposed below the casing as illustrated in FIG. 3. That is, the main lead 40 for transmitting and receiving electric power and the gas cooling unit 20 are disposed axially symmetrically with respect to the rotary shaft of the rotor 1 and, when the main lead 40 is drawn upward from the casing 10, the gas cooling unit 20 is disposed below the casing 10.

When the gas cooling unit 10 is disposed below the casing 10 as described above, there is an advantage in that the maintenance of the main lead 40 is easy. In addition, the installation area can be reduced as described in Embodiment 1.

FIG. 4 schematically illustrates a cross section taken along line B-B in FIG. 3. Although the main lead 40 is not indicated in this drawing, the gas cooling unit 20 is disposed below the casing 10.

### Embodiment 3

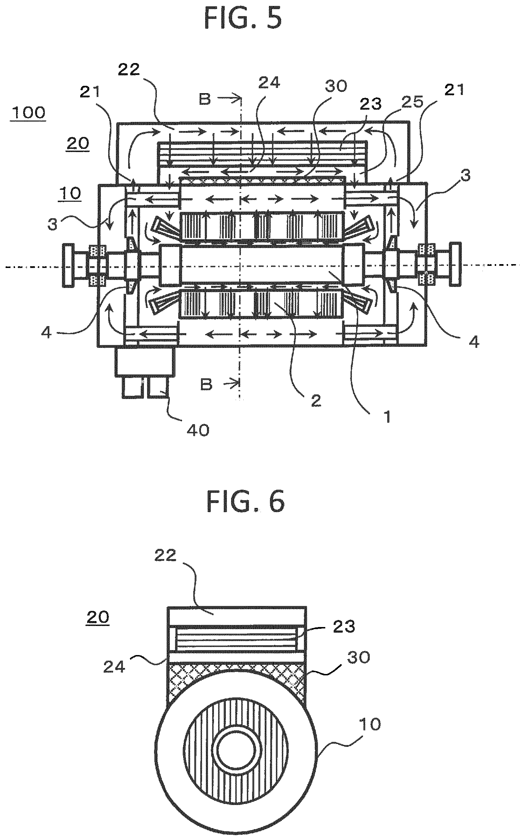

In Embodiments 1 and 2, a space is provided as the heat insulating unit 30 and a gas is encapsulated in the space as needed. In Embodiment 3, another member is used as the heat insulating unit 30. That is, FIGS. 5 and 6 illustrate the rotary electric machine 100 in which the space is filled with a heat insulating material as the heat insulating unit 30 for preventing heat conduction between the casing 10 and the gas cooling unit 20. When the space is filled with a heat insulating material as the heat insulating unit 30 as illustrated in FIGS. 5 and 6, there is an advantage in that maintenance is easy.

### Embodiment 4

In Embodiments 1 to 3, a space is provided as the heat insulating unit 30 and a heat insulating gas or a heat insulating material is encapsulated in the space. However, the same effects can be also obtained by providing a heat insulating member on the inner wall surface of the casing 10 or the inner wall surface of the low temperature cooling gas flow path 24 of the gas cooling unit 20 without providing a space.

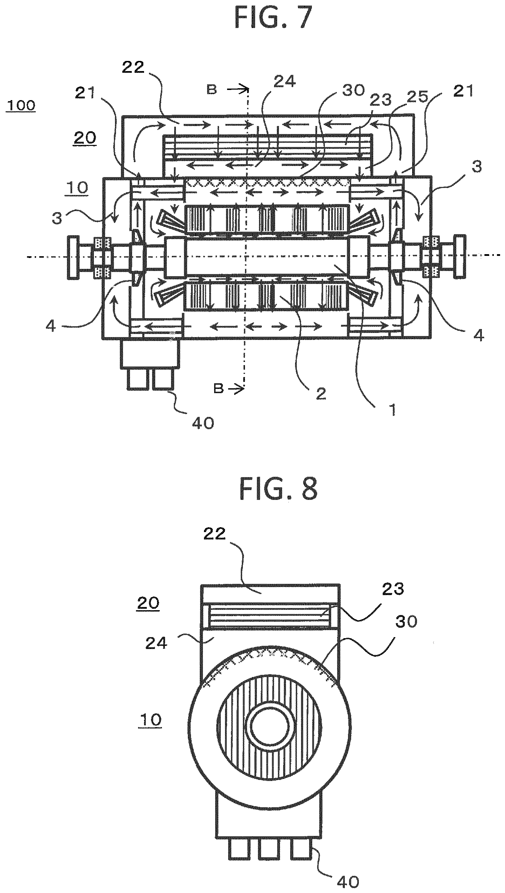

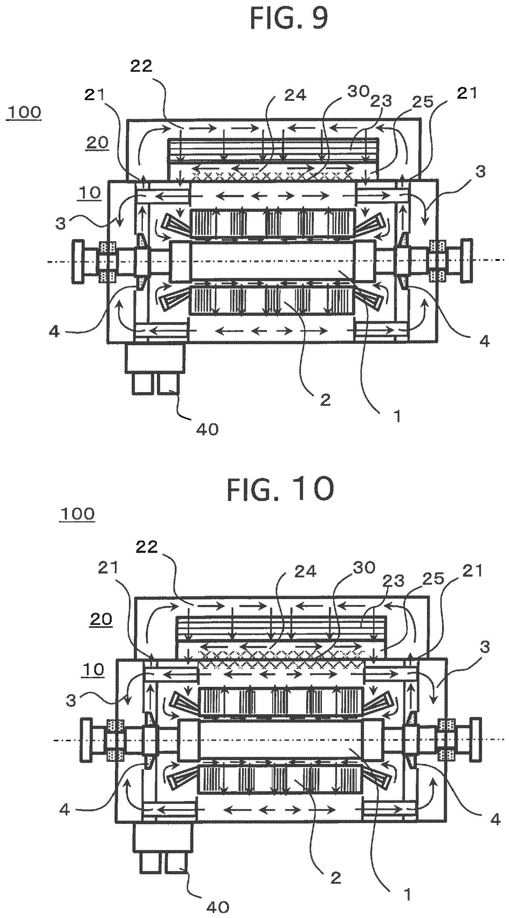

That is, as illustrated in Figs. 7 and 8, a heat insulating member may be pasted as the heat insulating unit 30 on the wall surface of the casing 10. Alternatively, as illustrated in FIG. 9, a heat insulating member may be pasted on the inner wall surface of the gas cooling unit 20 close to the casing 10.

In addition, as illustrated in FIG. 10, it is possible to prevent transfer of heat between the cooling gas flowing through the casing 10 and the cooling gas flowing through the gas cooling unit 20 by providing heat insulating members on the inner wall surfaces of both the casing 10 and the gas cooling unit 20 to configure the heat insulating unit 30.

Although the case in which the ventilation surface of the gas cooling unit is provided above the side surface of the casing and the case in which the ventilation surface of the gas cooling unit is provided below the side surface of the casing have been specifically described in the embodiments of the invention, needless to say particularly, the ventilation surface of the gas cooling unit may also be provided in one position beside the side surface of the casing so as to be parallel to the rotary shaft of the rotor of the rotary electric machine providing a still further embodiment of the invention. In the invention, the embodiments may be combined arbitrarily or the embodiments may be modified or features may be omitted as appropriate within the scope of the invention.

## Claims

1. A rotary electric machine (100) comprising:
- a casing (10) in which a stator (2) and a rotor (1) are accommodated, the stator (2) and the rotor (1) extending in a axial direction; and
- a gas cooling unit (20),
the gas cooling unit (20) including:
- intake ports (21) for a cooling gas provided on both ends in the axial direction and communicating with the casing (10);
- a high temperature cooling gas flow path (22) which extends between the intake ports (21) and through which the cooling gas at high temperature sucked from the intake ports (21) passes;
- a ventilation surface (23) exchanging heat with the cooling gas at high temperature from the high temperature cooling gas flow path (22) and cooling the cooling gas;
- a low temperature cooling gas flow path (24) which extends between exhaust ports (25) and through which the cooling gas having passed through the ventilation surface (23) passes; and
- the exhaust ports (25) for the cooling gas which are provided at both ends in the axial direction and through which the cooling gas at low temperature in the low temperature cooling gas flow path (24) flows to the casing (10),
wherein the ventilation surface (23) is disposed above, below, or beside a side surface of the casing (10) so as to be parallel to a rotary shaft of the rotor (1),
wherein the gas cooling unit (20) is integrally attached to the casing (10) and disposed so that the high temperature cooling gas flow path (22) is away from the casing (10) and the low temperature cooling gas flow path (24) is close to the casing (10),
wherein in the low temperature cooling gas flow path (24), a stream of the cooling gas flows to one exhaust port (25), and another stream flows to the other exhaust port (25),
wherein the two streams flow into an air gap between the stator (2) and
the rotor (1) into radial ports in the stator (2), and
wherein the radial ports of the stator (2) are connected to a third path that axially extends between the stator (2) and the casing (10), and wherein the third path is connected to each of the intake ports (21), the rotary electric machine (100) further comprising a heat insulating unit (30) provided between the low temperature cooling gas flow path (24) of the gas cooling unit (20) and the casing (10), the heat insulating unit (30) preventing transfer of heat between the low temperature cooling gas flow path (24) and the casing (10).

2. The rotary electric machine (100) according to claim 1,
further comprising:
a main lead (40) for transmitting and receiving electric power,
wherein the gas cooling unit (20) and the main lead (40) are provided axially symmetrically with respect to the rotary shaft of the rotor (1),
the main lead (40) is disposed below the casing (10), and
the gas cooling unit (20) is disposed above the casing (10).

3. The rotary electric machine (100) according to claim 1,
further comprising:
a main lead (40) for transmitting and receiving electric power,
wherein the gas cooling unit (20) and the main lead (40) are provided axially symmetrically with respect to the rotary shaft of the rotor (1),
the main lead (40) is disposed above the casing (10), and
the gas cooling unit (20) is disposed below the casing (10).

4. The rotary electric machine (100) according to claim 1,
wherein the heat insulating unit (30) includes a space provided between the casing (10) and the gas cooling unit (20) and a heat insulating material filling the space.

5. The rotary electric machine (100) according to claim 1,
wherein the heat insulating unit (30) is configured by at least one of a heat insulating member provided on an inner wall surface of the casing (10) and a heat insulating member provided on an inner surface of the gas cooling unit (20).

## Patentansprüche

1. Rotierende elektrische Maschine (100), die Folgendes aufweist:
- ein Gehäuse (10), in welchem ein Stator (2) und ein Rotor (1) untergebracht sind, wobei der Stator (2) und der Rotor (1) sich in Axialrichtung erstrecken; und
- eine Gas-Kühleinheit (20),
wobei die Gas-Kühleinheit (20) Folgendes aufweist:
- Einlassöffnungen (21) für ein Kühlgas, die an beiden Enden in Axialrichtung ausgebildet sind und mit dem Gehäuse (10) in Verbindung stehen;
- einen Hochtemperatur-Kühlgas-Strömungspfad (22), der zwischen den Einlassöffnungen (21) verläuft und durch welchen das von den Einlassöffnungen (21) eingesaugte Kühlgas auf hoher Temperatur hindurchgeht;
- eine Belüftungsoberfläche (23), die Wärme mit dem Kühlgas auf hoher Temperatur von dem Hochtemperatur-Kühlgas-Strömungspfad (22) austauscht und das Kühlgas kühlt;
- einen Niedertemperatur-Kühlgas-Strömungspfad (24), der zwischen Auslassöffnungen (25) verläuft und durch welchen das Kühlgas hindurchgeht, das durch die Belüftungsoberfläche (23) hindurchgegangen ist; und
- die Auslassöffnungen (25) für das Kühlgas, die an beiden Enden in Axialrichtung ausgebildet sind und durch welche das Kühlgas auf niedriger Temperatur im Niedertemperatur-Kühlgas-Strömungspfad (24) zu dem Gehäuse (10) strömt, wobei die Belüftungsoberfläche (23) oberhalb, unterhalb oder neben einer Seitenfläche des Gehäuses (10) angeordnet ist, so dass sie parallel zur Drehwelle des Rotors (1) verläuft,
wobei die Gas-Kühleinheit (20) integral am Gehäuse (10) angebracht ist und so angeordnet ist, dass sich der Hochtemperatur-Kühlgas-Strömungspfad (22) entfernt von dem Gehäuse (10) befindet und dass sich der Niedertemperatur-Kühlgas-Strömungspfad (24) nahe an dem Gehäuse (10) befindet,
wobei im Niedertemperatur-Kühlgas-Strömungspfad (24) eine Strömung des Kühlgases zu der einen Auslassöffnung (25) strömt und eine andere Strömung zu der anderen Auslassöffnung (25) strömt,
wobei die zwei Strömungen in einen Luftspalt zwischen dem Stator (2) und dem Rotor (1) in Radialöffnungen in dem Stator (2) strömen, und
wobei die Radialöffnungen des Stators (2) mit einem dritten Pfad verbunden sind, der axial zwischen dem Stator (2) und dem Gehäuse (10) verläuft, und wobei der dritte Pfad mit jeder der Einlassöffnungen (21) verbunden ist, wobei die rotierende elektrische Maschine (100) ferner eine Wärmeisoliereinheit (30) aufweist, die zwischen dem Niedertemperatur-Kühlgas-Strömungspfad (24) der Gas-Kühleinheit (20) und dem Gehäuse (10) angebracht ist, wobei die Wärmeisoliereinheit (30) eine Übertragung von Wärme zwischen dem Niedertemperatur-Kühlgas-Strömungspfad (24) und dem Gehäuse (10) verhindert.

2. Rotierende elektrische Maschine (100) nach Anspruch 1,
die ferner Folgendes aufweist:
eine Hauptleitung (40) zum Übertragen und Empfangen von elektrischer Energie,
wobei die Gas-Kühleinheit (20) und die Hauptleitung (40) axialsymmetrisch bezogen auf die Drehwelle des Rotors (1) angeordnet sind, wobei die Hauptleitung (40) unterhalb des Gehäuses (10) angeordnet ist und die Gas-Kühleinheit (20) oberhalb des Gehäuses (10) angeordnet ist.

3. Rotierende elektrische Maschine (100) nach Anspruch 1,
die ferner Folgendes aufweist:
eine Hauptleitung (40) zum Übertragen und Empfangen von elektrischer Energie,
wobei die Gas-Kühleinheit (20) und die Hauptleitung (40) axialsymmetrisch bezogen auf die Drehwelle des Rotors (1) angeordnet sind, wobei die Hauptleitung (40) oberhalb des Gehäuses (10) angeordnet ist und die Gas-Kühleinheit (20) unterhalb des Gehäuses (10) angeordnet ist.

4. Rotierende elektrische Maschine (100) nach Anspruch 1,
wobei die Wärmeisoliereinheit (30) einen Zwischenraum aufweist, der zwischen dem Gehäuse (10) und der Gas-Kühleinheit (20) ausgebildet ist, sowie ein Isoliermaterial aufweist, mit dem der Zwischenraum gefüllt ist.

5. Rotierende elektrische Maschine (100) nach Anspruch 1,
wobei die Wärmeisoliereinheit (30) konfiguriert ist mit zumindest einem von einem Wärmeisolierelement, das auf einer Innenwandfläche des Gehäuses (10) ausgebildet ist, und einem Wärmeisolierelement, das auf einer Innenfläche der Gas-Kühleinheit (20) ausgebildet ist.

## Revendications

1. Machine électrique rotative (100) comprenant :
- un boîtier (10) dans lequel un stator (2) et un rotor (1) sont logés, le stator (2) et le rotor (1) s'étendant dans une direction axiale ; et
- une unité de refroidissement à gaz (20),
l'unité de refroidissement à gaz (20) incluant :
- des orifices d'admission (21) pour un gaz de refroidissement, prévus sur les deux extrémités dans la direction axiale et communiquant avec le boîtier (10) ;
- un trajet d'écoulement de gaz de refroidissement à haute température (22) qui s'étend entre les orifices d'admission (21) et à travers lequel passe le gaz de refroidissement à haute température aspiré depuis les orifices d'admission (21) ;
- une surface de ventilation (23) échangeant de la chaleur avec le gaz de refroidissement à haute température provenant du trajet d'écoulement de gaz de refroidissement à haute température (22) et refroidissant le gaz de refroidissement ;
- un trajet d'écoulement de gaz de refroidissement à basse température (24) qui s'étend entre des orifices d'échappement (25) et à travers lequel passe le gaz de refroidissement qui est passé à travers la surface de ventilation (23) ; et
- les orifices d'échappement (25) pour le gaz de refroidissement qui sont prévus aux deux extrémités dans la direction axiale et à travers lesquels le gaz de refroidissement à basse température s'écoule dans le trajet d'écoulement de gaz de refroidissement à basse température (24) jusqu'au boîtier (10),
dans laquelle la surface de ventilation (23) est disposée au-dessus, au-dessous ou à côté d'une surface latérale du boîtier (10) de manière à être parallèle un arbre de rotation du rotor (1),
dans laquelle l'unité de refroidissement à gaz (20) est fixée de manière intégrale au boîtier (10) et est disposée de sorte que le trajet d'écoulement de gaz de refroidissement à haute température (22) est en éloignement du boîtier (10) et que le trajet d'écoulement de gaz de refroidissement à basse température (24) est près du boîtier (10),
dans laquelle, dans le trajet d'écoulement de gaz de refroidissement à basse température (24), un courant du gaz de refroidissement s'écoule jusqu'à un orifice d'échappement (25), et un autre courant s'écoule jusqu'à l'autre orifice d'échappement (25),
dans laquelle les deux courants s'écoulent jusque dans un intervalle d'air entre le stator (2) et le rotor (1) jusque dans des orifices radiaux dans le stator (2), et
dans laquelle les orifices radiaux du stator (2) sont connectés à un troisième trajet qui s'étend axialement entre le stator (2) et le boîtier (10), et dans laquelle le troisième trajet est connecté à chacun des orifices d'admission (21),
la machine électrique rotative (100) comprenant en outre une unité d'isolation thermique (30) prévue entre le trajet d'écoulement de gaz de refroidissement à basse température (24) de l'unité de refroidissement à gaz (20) et le boîtier (10), l'unité d'isolation thermique (30) empêchant un transfert de chaleur entre le trajet d'écoulement de gaz de refroidissement à basse température (24) et le boîtier (10).

2. Machine électrique rotative (100) selon la revendication 1, comprenant en outre :
un fil principal (40) destiné à transmettre et à recevoir une puissance électrique,
dans laquelle l'unité de refroidissement à gaz (20) et le fil principal (40) sont prévus axialement symétriquement par rapport à l'arbre de rotation du rotor (1),
le fil principal (40) est disposé au-dessous du boîtier (10), et
l'unité de refroidissement à gaz (20) est disposée au-dessus du boîtier (10).

3. Machine électrique rotative (100) selon la revendication 1, comprenant en outre :
un fil principal (40) destiné à transmettre et à recevoir une puissance électrique,
dans laquelle l'unité de refroidissement à gaz (20) et le fil principal (40) sont prévus axialement symétriquement par rapport à l'arbre de rotation du rotor (1),
le fil principal (40) est disposé au-dessus du boîtier (10), et
l'unité de refroidissement à gaz (20) est disposée au-dessous du boîtier (10).

4. Machine électrique rotative (100) selon la revendication 1,
dans laquelle l'unité d'isolation thermique (30) inclut un espace prévu entre le boîtier (10) et l'unité de refroidissement à gaz (20), et un matériau d'isolation thermique remplissant l'espace.

5. Machine électrique rotative (100) selon la revendication 1,
dans laquelle l'unité d'isolation thermique (30) est configurée par au moins un élément parmi un élément d'isolation thermique prévu sur une surface de paroi intérieure du boîtier (10) et un élément d'isolation thermique prévu sur une surface intérieure de l'unité de refroidissement à gaz (20).
